# EUROPEAN PATENT SPECIFICATION

(11) **EP 4 312 351 B1**
(45) Date of publication and mention of the grant of the patent: **02.12.2026**
(21) Application number: 22382723.9
(22) Date of filing: 28.07.2022
(51) Int. Cl.: H02K 3/24, H02K 5/20, H02K 9/197

(54) **IMPROVED INTERNAL COOLING SYSTEMS FOR ELECTRICAL MACHINES**
VERBESSERTE INTERNE KÜHLSYSTEME FÜR ELEKTRISCHE MASCHINEN
SYSTÈMES DE REFROIDISSEMENT INTERNE AMÉLIORÉS POUR MACHINES ÉLECTRIQUES

(43) Date of publication of application: 31.01.2024
(73) Proprietor: AIRBUS OPERATIONS, S.L.U., 28906 Getafe (Madrid) (ES)
(72) Inventor: MARIOTTO, Damien, 28906 Getafe (Madrid) (ES); URIONDO DEL POZO, Adrián, 28906 Getafe (Madrid) (ES); CABAÑAS GUTIERREZ, Jose Manuel, 28906 Getafe (Madrid) (ES); PAREDES PUENTE, Jesús, 20011 San Sebastián (ES); PRIETO ROCANDIO, Borja, 20010 San Sebastián (ES); SATRÚSTEGUI DE LEGARRA, Marco, 20002 San Sebastián (ES); ARTETXE BALLEJO, Gurutz, 20012 San Sebastián (ES); MARTÍNEZ-ITURRALDE MAIZA, Miguel, 20016 San Sebastián (ES)
(74) Representative: Herrero & Asociados, S.L.

(56) References cited:
- CN-A- 107 919 745
- CN-U- 210 007 491
- JP-A- 2006 325 309
- JP-A- H0 951 656
- JP-B2- 5 973 724
- KR-A- 20200 139 482
- US-A1- 2008 018 180
- US-A1- 2021 281 142
- US-B2- 7 176 593
- GAI YAOHUI ET AL: "Cooling of Automotive Traction Motors: Schemes, Examples, and Computation Methods", IEEE TRANSACTIONS ON INDUSTRIAL ELECTRONICS, IEEE SERVICE CENTER, PISCATAWAY, NJ, USA, vol. 66, no. 3, 1 March 2019 (2019-03-01), pages 1681 - 1692, XP011693819, ISSN: 0278-0046, [retrieved on 20181031], DOI: 10.1109/TIE.2018.2835397
- CHONG YEW CHUAN ET AL: "Review of Advanced Cooling Systems of Modern Electric Machines for EMobility Application", 2021 IEEE WORKSHOP ON ELECTRICAL MACHINES DESIGN, CONTROL AND DIAGNOSIS (WEMDCD), IEEE, 8 April 2021 (2021-04-08), pages 149 - 154, XP033913863, DOI: 10.1109/WEMDCD51469.2021.9425675

## Description

### Object of the invention

The present invention refers to an internal cooling system for an electric machine (e-machine) for aeronautical propulsion application that achieves increased performances thanks to the proposed internal cooling system.

Specifically, this invention focuses on internal cooling systems for permanent magnet synchronous machines where the losses are mainly located in conductors and stator laminations and the reduced losses are located in the rotor.

### Background of the invention

The patent publication CN107919745A relates to a stator for an electric machine of a vehicle, the stator comprises a head winding, wherein the head winding has a plurality of windings. The windings of the head winding are cast with a potting material. This publication describes a cooling system using a periphery casing liquid cooling jacket in contact with stator laminations and impregnated head winding with cast material.

The mentioned cooling system comprises Non-Drive End (NDE) and a Drive-End (DE) casing liquid cooling jackets in contact with the impregnated head winding. The periphery casing liquid cooling jacket is used to extract stator laminations iron losses by conduction. The NDE and DE casing liquid cooling jackets are used to extract head winding losses.

In electrical motor (e-motors), to increase an e-machine performance, the cooling system has to be improved by reducing thermal resistances (e.g., using high thermal conductivity materials) and reducing the thermal path between the source and the thermal sink (casing liquid cooling jacket). This is not the case by the mentioned cooling system of CN107919745A.

Thus, the improved performances presented in the cooling system of CN107919745A are limited due to high temperature reached inside the slot by the conductors (i.e., winding turns) and due to the high thermal resistive path between those conductors and the casing liquid cooling jacket.

Hence, there is a demand to improve the known cooling system with respect to the management of the winding losses and the thermal resistive path. The present invention satisfies this demand.

### Description of the invention

The present invention relates to an internal cooling system for an electric motor (i.e. e-machine), in particular, for a Permanent Magnet Synchronous Machine (PMSM). The motor comprises a DE casing and a NDE casing, a stator with laminations and slots, motor winding comprising head windings (e.g., impregnated head windings) and winding turns in the stator slots (i.e., stator slot winding turns) and other conventional elements of an e-motor.

The purpose of the cooling system according to the present invention is to increase the e-machine figure of merit (i.e. power density and efficiency) thanks to the proposed internal cooling system which can extract the conductor losses via:
- A periphery liquid cooling jacket in contact with the stator laminations to extract stator laminations iron losses and in contact with a high conductivity matrix encapsulating the head windings to extract head winding losses.
- A slot-through liquid cooling jacket in contact with the stator slot winding, where the "heart" conductor losses are generated and with a high conductivity matrix encapsulating the head windings of the motor, where the "extremity" conductor losses are generated.
- NDE and DE liquid cooling jackets also in contact with the high conductivity matrix encapsulating the head windings enabling to extract the "extremity" or "head" conductor losses with low electrical conductivity, (i.e., electrical insulation).

The proposed cooling system reduces thermal resistances (e.g., by using high thermal conductivity materials) and reduces the thermal path between the source and the thermal sink (e.g., by using a casing liquid cooling jacket in combination with a high conductivity matrix). Hence, the integrated and embodied cooling system in contact to the thermal sources (motor winding and iron material) enables to increase the figure of merit of an e-machine (i.e., power density and efficiency), and thus, it increases the e-machine performance.

The main aspect of the present invention relates to an internal cooling system for a motor comprising a DE casing and a NDE casing, a stator with laminations and slots, head windings and stator slot winding turns. The internal cooling system comprises a first liquid cooling channel "Cool IN" and a second liquid cooling channel "Cool OUT", a periphery casing liquid cooling jacket connected to the first liquid cooling channel "Cool IN" and to the second liquid cooling channel "Cool OUT". The periphery casing liquid cooling jacket can be configured to be in contact with the stator laminations to extract stator laminations iron losses and with a high conductivity matrix to extract head winding losses.

Furthermore, the internal cooling system comprises a DE and a NDE casing liquid cooling jackets configured to be established inside the DE and NDE casings, respectively, (axially or radially, in an encapsulated manner) and connected to the first liquid cooling channel "Cool IN" and to the second liquid cooling channel "Cool OUT", respectively. The DE and the NDE casing liquid cooling jackets are configured to be in contact with side surfaces of the head windings to extract head winding losses.

Furthermore, the internal cooling system comprises a slot-through liquid cooling jacket connected to the NDE and a DE casing liquid cooling jackets and configured to be in contact with the head windings and the stator slot winding turns to extract winding losses.

In some examples, the slot-through liquid cooling jacket is configured to be established through the stator slot winding turns when the motor comprises a concentrated winding configuration or to be established on a side of the stator slot winding turns when the motor comprises a distributed winding configuration.

The internal cooling system is configured to receive coolant, as e.g. liquid, via the first liquid cooling channel or via the second liquid cooling channel, distribute the liquid through the periphery casing liquid cooling jacket, the DE casing liquid cooling jacket, the NDE casing liquid cooling jacket and the slot-through liquid cooling jacket and expel the coolant via the second liquid cooling channel or the first liquid cooling channel (hence, providing a functionality).

In some examples, the first liquid cooling channel and/or the second liquid cooling channel have a circular shape.

In some examples, the periphery casing liquid cooling jacket has a spiral shape.

In some examples, the DE and the NDE casing liquid cooling jackets have a spiral shape and can be encapsulated inside the DE and NDE casings respectively, axially or radially.

In some examples, the internal cooling system further comprises a high thermal conductivity matrix in contact with the NDE and a DE casing liquid cooling jackets and the head windings and configured to extract head winding losses. The DE and NDE liquid cooling jackets can be in contact with the head windings through a high thermal conductivity matrix (resin, impregnation, epoxy, etc.). In some examples, the high thermal conductivity matrix comprises resin, impregnation, or epoxy.

In some examples, the internal cooling system comprising the periphery casing liquid cooling jacket, the NDE and a DE casing liquid cooling jackets and the slot-through liquid cooling jacket connected by the first and second liquid cooling channels "Cool IN" and "Cool OUT" comprise a small teeth square slots configuration associated with the high thermal conductivity matrix to increase the heat exchange surface and increase the thermal exchange between the cooling system and the motor head winding heat source.

According to the invention, the first liquid cooling channel "Cool IN", the second liquid cooling channel "Cool OUT", the periphery casing liquid cooling jacket, the DE casing liquid cooling jacket, the NDE casing liquid cooling jacket and the slot-through liquid cooling jacket comprise metallic material such as aluminum, alumina (Al2O3), aluminum Nitride (AIN), stainless steel or titanium insulated with a polymer enamel coating or aramid paper or polyimide films or liners.

According to the invention, when the cooling system comprises metallic material, the cooling system comprises a non-metallic barrier established in the slot-through liquid cooling jacket made of Polyetheretherketone, Polyetherketoneketone or carbon fiber to cut the electrical/magnetic path.

In some examples, the first liquid cooling channel "Cool IN", the second liquid cooling channel "Cool OUT", the periphery casing liquid cooling jacket, the DE casing liquid cooling jacket, the NDE casing liquid cooling jacket and the slot-through liquid cooling jacket comprise non-metallic and non-conductive electrically material such as BeO, Silicon Carbides (SSiC), Silicon Carbide Reaction bonded (RBSiC), Silicon Nitride (Si3N4), Polyetheretherketone Polyetherketoneketone, epoxy or carbon fiber.

A further aspect of the present invention relates to an electric motor comprising the internal cooling system according to the first aspect of the present invention. Furthermore, the electric motor can comprise a shaft and a rotor, and wherein the shaft comprises fins to cool down the rotor by convection and thermal exchange with the internal cooling system.

In some examples, the electric motor comprises impregnated head windings having an impregnation of polyester or silicon epoxy resins.

In a first configuration of the electric motor, the internal cooling system comprises dielectric fluid such as mineral oil as coolant when the first liquid cooling channel "Cool IN", the second liquid cooling channel "Cool OUT", the periphery casing liquid cooling jacket, the DE casing liquid cooling jacket, the NDE casing liquid cooling jacket and the slot-through liquid cooling jacket comprise metallic material.

In another configuration of the electric motor, the internal cooling system comprises Ethylene Glycol Water as coolant, when the first liquid cooling channel "Cool IN", the second liquid cooling channel "Cool OUT", the periphery casing liquid cooling jacket, the DE casing liquid cooling jacket, the NDE casing liquid cooling jacket and the slot-through liquid cooling jacket comprise non-metallic material.

### Brief description of the drawings

For a better understanding the above explanation and for the sole purpose of providing an example, some non-limiting drawings are included that schematically depict a practical embodiment.
Figure 1 shows an example of an internal cooling system according to the present invention established in an electric motor.
Figure 2 shows a particular configuration of the slot-through liquid cooling jacket of the internal cooling system according to the present invention.

### Description of the detailed embodiment

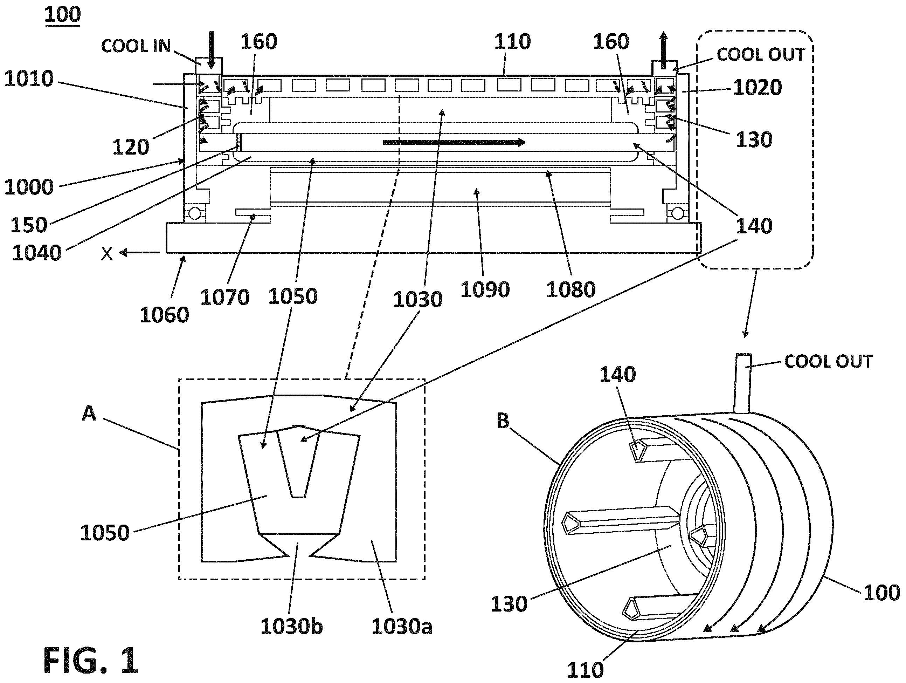

Figure 1 shows the internal cooling system (100) according to the present invention established in an e-machine, in particular; in an electric motor (1000), as shown in the figure. The electric motor (1000) comprises a DE casing (1010) and a NDE casing (1020), a stator (1030) with stator laminations (1030a) and stator slots (1030b), head windings (1040) and stator slot winding turns (1050). Furthermore, conventional elements of the electric motor (1000) as e.g., a shaft (1060), fins (1070), magnets (1080), and a rotor (1090) are also shown in figure 1 to illustrate the reader.

The internal cooling system (100) comprises sub-systems or sub-channels that can be interconnected together through liquid cooling channels conducting liquid as coolant. In particular:
- The internal cooling connection can be made by a first liquid cooling channel (cool IN) going into a first cooling subsystem or sub-channel, a second cooling subsystem and a third cooling subsystem and ending at a second liquid cooling channel (Cool OUT).
- The internal cooling connection can also made by the second liquid cooling channel (Cool OUT) going into the first cooling subsystem or sub-channel, the second cooling subsystem and the third cooling subsystem, and ending at the first liquid cooling channel (Cool IN).

Hence, the proposed internal cooling system can function as a cooling system.

### First cooling subsystem

The internal cooling system (100) comprises a first cooling subsystem comprising a periphery casing liquid cooling jacket (110) connected to the first liquid cooling channel (Cool IN) and to the second liquid cooling channel (Cool OUT). The periphery casing liquid cooling jacket (110) can be in contact with the stator (1030) of the electric motor (1000). In particular, the periphery casing liquid cooling jacket (110) can be in contact with stator laminations (1030a) where the iron losses are generated. Furthermore, the periphery casing liquid cooling jacket (110) can be in contact with a top surface of the head windings (1040) where the "extremity" conductor losses are generated.

### Second cooling subsystem

The internal cooling system (100) comprises a second cooling subsystem comprising DE and NDE casing liquid cooling jackets (120, 130) configured to be established inside the DE and NDE casings (1010, 1020) of the electric motor (1000), respectively, and in an encapsulated manner (axially or radially). The DE and NDE casing liquid cooling jackets (120, 130) can be connected to the first liquid cooling channel (Cool IN) and to the second liquid cooling channel (Cool OUT), respectively. The DE and NDE casing liquid cooling jackets (120, 130) can be in contact with a side surface of the head windings (1040) where the "extremity" conductor losses are generated. The DE and NDE casing liquid cooling jackets (120, 130) can be configured to remove any local hot spots generated by the head windings (1040).

In this example, the contact between the DE and NDE casing liquid cooling jackets (120, 130) and the head windings (1040) surface can be improved with a high thermal conductivity matrix (160) to extract head winding losses.

### Third cooling subsystem

The internal cooling system (100) further comprises a third cooling subsystem (which can be considered a continuation of the second cooling subsystem) comprising a slot-through liquid cooling jacket (140) connected to the NDE and a DE casing liquid cooling jackets (120, 130) in contact with the head windings (1040), where the "extremity" conductor losses are generated, and in contact with the stator slot winding turns (1050), where the "heart" conductor losses are generated.

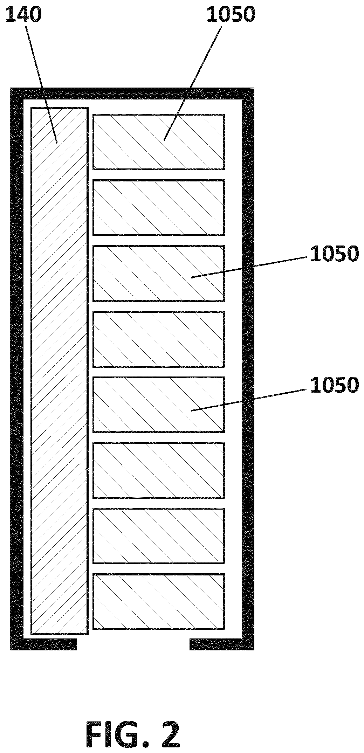

In the example of figure 1, the electric motor (1000) comprises a concentrated winding configuration. Hence, the slot-through liquid cooling jacket (140) can be established through the stator slot winding turns (1050), as shown in section A of figure 1. A second configuration for the slot-through liquid cooling jacket (140) is shown in figure 2.

Hence, the three cooling sub-systems (110, 120, 130, 140) can be interconnected together through liquid cooling channels forming the internal cooling system (100) as shown in the 3D representation (B) shown in figure 1.

In the example of figure 1, the internal cooling system (100) is configured to receive coolant, in particular liquid, via the first liquid cooling channel (Cool IN). The internal cooling system (100) is further configured to distribute the liquid through the periphery casing liquid cooling jacket (110) (i.e., e-motor periphery), the DE casing liquid cooling jacket (120), the NDE casing liquid cooling jacket (130) and the slot-through liquid cooling jacket (140) and expel the liquid through the second liquid cooling channel (Cool OUT).

The liquid (e.g., Ethylene Glycol Water or mineral oil like silicon oil) can enter the e-machine internal cooling system (100) through the first liquid cooling channel (Cool IN) in the DE casing (1010) (or via the second liquid cooling channel (Cool OUT) in the NDE casing (1020) depending on integration of the internal cooling system (100) radially (as shown in figure 1) or axially in another configuration, and go in two parallel paths:
The connection is made by one circular channel (cool IN) going into two paths or sub-channels, i.e., the casing liquid cooling jacket (110) and the DE casing liquid cooling jacket (120). Each sub-channel can be shaped in spiral, so the heat exchange surface is maximized between the heat source and the internal cooling system (100).

First path: In the example of figure 1, the periphery casing liquid cooling jacket (110) can extend in the X axis in a spiral shape (i.e., circular around the X axis) towards the NDE casing liquid cooling jacket (130), where it can reconnect into the second liquid cooling channel (Cool OUT) which can have a circular shape.

Second path: In the example of figure 1, the DE casing liquid cooling jacket (120) can extend in the Y axis in a spiral shape inside the DE casing (1010) (which can be circular around the x axis) and then it can connect in serial into the slot-through liquid cooling jacket (140) and then into the NDE casing liquid cooling jacket (130). Finally, the DE casing liquid cooling jacket (120) can reconnect into the second liquid cooling channel (Cool OUT) which can have a circular shape.

Finally, the internal cooling system (100) can be configured to expel the liquid via the second liquid cooling channel (Cool OUT).

In another example, the internal cooling system (100) is configured to receive liquid via the second liquid cooling channel (Cool OUT). The internal cooling system (100) is configured to distribute the liquid through the periphery casing liquid cooling jacket (110) (i.e., e-motor periphery), the DE casing liquid cooling jacket (120), the NDE casing liquid cooling jacket (130) and the slot-through liquid cooling jacket (140). Finally, the internal cooling system (100) can be configured to expel the liquid via the first liquid cooling channel (Cool IN).

The sub-systems of the e-machine internal cooling system (100) can have small teeth square slots configuration (as shown on figure 1) in combination with the high thermal conductivity matrix (160) to increase the heat exchange surface and increase the thermal exchange between the internal cooling system (100) and the head winding heat source.

In the example of figure 1, the shaft (1060) of the electric motor (1000) can comprise fins (1070) to mix the internal motor flow coming from the exterior of the electric motor (1000) (depending on the motor closure from environmental or safety or EMH (efficient market hypothesis) standpoint) and to cool down the rotor (1090) by convection and thermal exchange with the internal cooling system (100).

The slot-through cooling jacket (140) could be established for example in the middle of stator slot winding turns (1050) in case of concentrated winding configuration (as shown in section A of figure 1) or on the side in case of distributed winding configuration (as shown in figure 2).

This internal cooling system (100) could be made in metallic material by Additive Layer Manufacturing or by a combination of machining and soldering. The material to be used could be aluminum, alumina (Al2O3), aluminum Nitride (AIN), stainless steel or titanium (good volume to weight ratio) which may need to be insulated (e.g., polymer enamel coating, or aramid paper (e.g., Nomex), or polyimide films (e.g., Kapton), or liners (e.g., Polyetheretherketone or Polyetherketoneketone)) on the surface in contact with the winding.

Metallic material may cause an induced current inside the internal cooling system (100), creating leakage currents that can counteract the magnetic flux created by the winding due to the Lenz law. This could provoke a degraded effect on the coolant and material reliability. For that, it is convenient to cut the electrical and/or magnetic path via a non-metallic barrier (150) as shown in figure 1. The non-metallic barrier (150) can be e.g., Polyetheretherketone, Polyetherketoneketone or carbon fiber established in a hybrid design concept as shown in figure 1. The use of dielectric fluid as coolant (e.g., mineral oil) can be suitable for this type of configuration.

This internal cooling system (100) could be made non-metallic material, capable to withstand high T°C and having high thermal conductivity while keeping a good volume to weight ratio and being non-conductive electrically, like e.g., BeO, Silicon Carbides (SSiC), Silicon Carbide Reaction bonded (RBSiC), Silicon Nitride (Si3N4), Polyetheretherketone, Polyetherketoneketone, epoxy, carbon fiber etc.

For the impregnation of the winding, materials capable to withstand high T°C and having high thermal conductivity while keeping a good volume to weight ratio, as polyester and silicon epoxy resins can be used.

Figure 2 shows a particular configuration for the slot-through liquid cooling jacket (140) of the internal cooling system (100) according to the present invention. In this particular configuration, the slot-through cooling jacket (140) can be established on a side of the stator slot winding turns (1050) when the electric motor (1000) comprises a distributed winding configuration.

## Claims

1. An internal cooling system (100) for an electric motor (1000), the electric motor (1000) comprising a Drive End, DE, casing (1010) and a Non-Drive End, NDE, casing (1020), a stator (1030) with stator laminations (1030a) and stator slots (1030b), a motor winding comprising head windings (1040) and stator slot winding turns (1050) in the stator slots (1030b), the internal cooling system (100) comprising:
- a first liquid cooling channel (Cool IN) and a second liquid cooling channel (Cool OUT) configured to receive or expel liquid;
- a periphery casing liquid cooling jacket (110) connected to the first liquid cooling channel (Cool IN) and to the second liquid cooling channel (Cool OUT), the periphery casing liquid cooling jacket (110) configured to be in contact with the stator laminations (1030a) to extract stator laminations iron losses and with a top surface of the head windings (1040) to extract winding losses,
- DE and NDE casing liquid cooling jackets (120, 130) configured to be established inside the DE and NDE casings (1010, 1020), respectively, and connected to the first liquid cooling channel (Cool IN) and to the second liquid cooling channel (Cool OUT), respectively,
- wherein the DE and the NDE casing liquid cooling jackets (120, 130) are configured to be in contact with side surfaces of the head windings (1040) to extract winding losses; and
- a slot-through liquid cooling jacket (140) connected to the DE and the NDE casing liquid cooling jackets (120, 130) and configured to be in contact with the head windings (1040) and the stator slot winding turns (1050) to extract winding losses, and
- wherein the internal cooling system (100) is configured to:
∘ receive the liquid via the first liquid cooling channel (Cool IN) and expel the liquid via the second liquid cooling channel (Cool OUT); or
∘ receive the liquid via the second liquid cooling channel (Cool OUT) and expel liquid via the first liquid cooling channel (Cool IN); and
∘ distribute the liquid through the periphery casing liquid cooling jacket (110), the DE casing liquid cooling jacket (120), the NDE casing liquid cooling jacket (130) and the slot-through liquid cooling jacket (140),
- wherein the first liquid cooling channel (Cool IN), the second liquid cooling channel (Cool OUT), the periphery casing liquid cooling jacket (110), the DE casing liquid cooling jacket (120), the NDE casing liquid cooling jacket (130) and the slot-through liquid cooling jacket (140) comprise metallic material, such as aluminum, alumina Al2O3, aluminum nitride, stainless steel or titanium insulated with a polymer enamel coating or aramid paper or polyimide films or liners; and
- a non-metallic barrier (150) established in the slot-through liquid cooling jacket (140) such as Polyetheretherketone or Polyetherketoneketone or carbon fiber to cut the electrical and/or magnetic path.

2. The internal cooling system (100) according to claim 1, wherein the first liquid cooling channel (Cool IN) and/or the second liquid cooling channel (Cool OUT) have a circular shape.

3. The internal cooling system (100) according to claims 1 or 2, wherein the periphery casing liquid cooling jacket (110) has a spiral shape.

4. The internal cooling system (100) according to any of the preceding claims, wherein the DE and the NDE casing liquid cooling jackets (120, 130) have a spiral shape and are configured to be encapsulated axially or radially inside the DE and NDE casings (1010, 1020), respectively.

5. The internal cooling system (100) according to any of the preceding claims, wherein the slot-through liquid cooling jacket (140) is configured:
- to be established through the stator slot winding turns (1050) when the electric motor (1000) comprises a concentrated winding configuration; or
- to be established on a side of the stator slot winding turns (1050) when the electric motor (1000) comprises a distributed winding configuration.

6. The internal cooling system (100) according to any of the preceding claims, further comprising a high thermal conductivity matrix (160) configured to be in contact with the NDE and DE casing liquid cooling jackets (120, 130) and the head windings (1040) of the electric motor (1000), wherein the high thermal conductivity matrix (160) is configured to extract head winding losses.

7. The internal cooling system (100) according to the previous claim, wherein the high thermal conductivity matrix (160) comprises resin, impregnation or epoxy.

8. The internal cooling system (100) according to any of claims 6 or 7, wherein the periphery casing liquid cooling jacket (110), the NDE and a DE casing liquid cooling jackets (120, 130) and the slot-through liquid cooling jacket (140) comprise a small teeth square slots configuration in combination with the high thermal conductivity matrix (160) to increase a heat exchange surface.

9. An electric motor (1000) comprising the internal cooling system (100) according to any of the preceding claims, the internal cooling system (100) comprising a liquid, the motor comprising a shaft (1060) and a rotor (1090), and wherein the shaft (1060) comprises fins (1070) to cool down the rotor (1090) by convection and thermal exchange with the internal cooling system (100).

10. The electric motor (1000) according to claim 9, further comprising impregnated head windings (1040) having an impregnation of polyester or silicon epoxy resins.

11. The electric motor (1000) according to claims 9 or 10, wherein the internal cooling system (100) comprises dielectric fluid such as mineral oil as coolant when the first liquid cooling channel (Cool IN), the second liquid cooling channel (Cool OUT), the periphery casing liquid cooling jacket (110), the DE casing liquid cooling jacket (120), the NDE casing liquid cooling jacket (130) and the slot-through liquid cooling jacket (140) comprise metallic material.

12. The electric motor (1000) according to claims 9 to 11, being a Permanent Magnet Synchronous Machine.

## Patentansprüche

1. Internes Kühlsystem (100) für einen Elektromotor (1000), wobei der Elektromotor (1000) ein antriebsseitiges Gehäuse, DE-Gehäuse (1010), und ein nichtantriebsseitiges Gehäuse, NDE-Gehäuse (1020), einen Stator (1030) mit Statorblechen (1030a) und Statornuten (1030b), eine Motorwicklung umfassend Wickelköpfe (1040) und Statornut-Wicklungswindungen (1050) in den Statornuten (1030b) umfasst, wobei das interne Kühlsystem (100) umfasst:
- einen ersten Flüssigkeitskühlkanal (Cool IN) und einen zweiten Flüssigkeitskühlkanal (Cool OUT), die dazu eingerichtet sind, Flüssigkeit aufzunehmen oder auszustoßen;
- einen Gehäuseumfangs-Flüssigkeitskühlmantel (110), der mit dem ersten Flüssigkeitskühlkanal (Cool IN) und mit dem zweiten Flüssigkeitskühlkanal (Cool OUT) verbunden ist, wobei der Gehäuseumfangs-Flüssigkeitskühlmantel (110) dazu eingerichtet ist, mit den Statorblechen (1030a) in Kontakt zu stehen, um Eisenverluste der Statorbleche abzuführen, und mit einer oberen Oberfläche der Wickelköpfe (1040) in Kontakt zu stehen, um Wicklungsverluste abzuführen,
- DE- und NDE-Gehäuse-Flüssigkeitskühlmäntel (120, 130), die dazu eingerichtet sind, innerhalb des DE- bzw. NDE-Gehäuses (1010, 1020) angeordnet zu sein, und mit dem ersten Flüssigkeitskühlkanal (Cool IN) bzw. mit dem zweiten Flüssigkeitskühlkanal (Cool OUT) verbunden sind,
- wobei die DE- und NDE-Gehäuse-Flüssigkeitskühlmäntel (120, 130) dazu eingerichtet sind, mit Seitenflächen der Wickelköpfe (1040) in Kontakt zu stehen, um Wicklungsverluste abzuführen; und
- einen Nutdurchgangs-Flüssigkeitskühlmantel (140), der mit den DE- und NDE-Gehäuse-Flüssigkeitskühlmänteln (120, 130) verbunden ist und dazu eingerichtet ist, mit den Wickelköpfen (1040) und den Statornut-Wicklungswindungen (1050) in Kontakt zu stehen, um Wicklungsverluste abzuführen, und
- wobei das interne Kühlsystem (100) dazu eingerichtet ist:
∘ die Flüssigkeit über den ersten Flüssigkeitskühlkanal (Cool IN) aufzunehmen und die Flüssigkeit über den zweiten Flüssigkeitskühlkanal (Cool OUT) auszustoßen; oder
∘ die Flüssigkeit über den zweiten Flüssigkeitskühlkanal (Cool OUT) aufzunehmen und Flüssigkeit über den ersten Flüssigkeitskühlkanal (Cool IN) auszustoßen; und
∘ die Flüssigkeit durch den Gehäuseumfangs-Flüssigkeitskühlmantel (110), den DE-Gehäuse-Flüssigkeitskühlmantel (120), den NDE-Gehäuse-Flüssigkeitskühlmantel (130) und den Nutdurchgangs-Flüssigkeitskühlmantel (140) zu verteilen,
- wobei der erste Flüssigkeitskühlkanal (Cool IN), der zweite Flüssigkeitskühlkanal (Cool OUT), der Gehäuseumfangs-Flüssigkeitskühlmantel (110), der DE-Gehäuse-Flüssigkeitskühlmantel (120), der NDE-Gehäuse-Flüssigkeitskühlmantel (130) und der Nutdurchgangs-Flüssigkeitskühlmantel (140) metallisches Material, wie beispielsweise Aluminium, Aluminiumoxid (Al₂O₃), Aluminiumnitrid, Edelstahl oder Titan umfassen, das mit einer Polymer-Emaillebeschichtung oder Aramidpapier oder Polyimidfolien oder - auskleidungen isoliert ist; und
- eine nicht-metallische Barriere (150), die in dem Nutdurchgangs-Flüssigkeitskühlmantel (140) angeordnet ist, wie beispielsweise Polyetheretherketon oder Polyetherketonketon oder Kohlenstofffaser, um den elektrischen und/oder magnetischen Pfad zu unterbrechen.

2. Internes Kühlsystem (100) nach Anspruch 1, wobei der erste Flüssigkeitskühlkanal (Cool IN) und/oder der zweite Flüssigkeitskühlkanal (Cool OUT) eine kreisförmige Form aufweisen.

3. Internes Kühlsystem (100) nach Anspruch 1 oder 2, wobei der Gehäuseumfangs-Flüssigkeitskühlmantel (110) eine Spiralform aufweist.

4. Internes Kühlsystem (100) nach einem der vorhergehenden Ansprüche, wobei die DE- und NDE-Gehäuse-Flüssigkeitskühlmäntel (120, 130) eine Spiralform aufweisen und dazu eingerichtet sind, axial oder radial jeweils innerhalb des DE- bzw. NDE-Gehäuses (1010, 1020) gekapselt zu sein.

5. Internes Kühlsystem (100) nach einem der vorhergehenden Ansprüche, wobei der Nutdurchgangs-Flüssigkeitskühlmantel (140) dazu eingerichtet ist:
- durch die Statornut-Wicklungswindungen (1050) hindurch angeordnet zu sein, wenn der Elektromotor (1000) eine konzentrierte Wicklungskonfiguration umfasst; oder
- an einer Seite der Statornut-Wicklungswindungen (1050) angeordnet zu sein, wenn der Elektromotor (1000) eine verteilte Wicklungskonfiguration umfasst.

6. Internes Kühlsystem (100) nach einem der vorhergehenden Ansprüche, ferner umfassend eine Matrix mit hoher Wärmeleitfähigkeit (160), die dazu eingerichtet ist, mit den NDE- und DE-Gehäuse-Flüssigkeitskühlmänteln (120, 130) und den Wickelköpfen (1040) des Elektromotors (1000) in Kontakt zu stehen, wobei die Matrix mit hoher Wärmeleitfähigkeit (160) dazu eingerichtet ist, Wickelkopfverluste abzuführen.

7. Internes Kühlsystem (100) nach dem vorhergehenden Anspruch, wobei die Matrix mit hoher Wärmeleitfähigkeit (160) Harz, Imprägnierung oder Epoxidharz umfasst.

8. Internes Kühlsystem (100) nach einem der Ansprüche 6 oder 7, wobei der Gehäuseumfangs-Flüssigkeitskühlmantel (110), die NDE- und DE-Gehäuse-Flüssigkeitskühlmäntel (120, 130) und der Nutdurchgangs-Flüssigkeitskühlmantel (140) eine Konfiguration mit kleinen Zähnen und quadratischen Nuten in Kombination mit der Matrix mit hoher Wärmeleitfähigkeit (160) umfassen, um eine Wärmeaustauschfläche zu vergrößern.

9. Elektromotor (1000), umfassend das interne Kühlsystem (100) nach einem der vorhergehenden Ansprüche, wobei das interne Kühlsystem (100) eine Flüssigkeit umfasst, wobei der Motor eine Welle (1060) und einen Rotor (1090) umfasst, und wobei die Welle (1060) Rippen (1070) umfasst, um den Rotor (1090) durch Konvektion und thermischen Austausch mit dem internen Kühlsystem (100) abzukühlen.

10. Elektromotor (1000) nach Anspruch 9, ferner umfassend imprägnierte Wickelköpfe (1040), die eine Imprägnierung aus Polyester- oder Silikon-Epoxidharzen aufweisen.

11. Elektromotor (1000) nach Anspruch 9 oder 10, wobei das interne Kühlsystem (100) ein dielektrisches Fluid wie Mineralöl als Kühlmittel umfasst, wenn der erste Flüssigkeitskühlkanal (Cool IN), der zweite Flüssigkeitskühlkanal (Cool OUT), der Gehäuseumfangs-Flüssigkeitskühlmantel (110), der DE-Gehäuse-Flüssigkeitskühlmantel (120), der NDE-Gehäuse-Flüssigkeitskühlmantel (130) und der Nutdurchgangs-Flüssigkeitskühlmantel (140) metallisches Material umfassen.

12. Elektromotor (1000) nach einem der Ansprüche 9 bis 11, der eine Synchronmaschine mit Permanentmagneten ist.

## Revendications

1. Système de refroidissement interne (100) pour un moteur électrique (1000), le moteur électrique (1000) comprenant un carter Côté Entraînement CE (1010) et un carter Côté Non Entraînement NCE (1020), un stator (1030) comportant des lamelles de stator (1030a) et des encoches de stator (1030b), un enroulement de moteur comprenant des enroulements de tête (1040) et des spires d'enroulement d'encoches de stator (1050) dans les encoches de stator (1030b), le système de refroidissement interne (100) comprenant :
- un premier canal de refroidissement par liquide (ENTREE Refroidissement) et un deuxième canal de refroidissement par liquide (SORTIE Refroidissement) configurés pour recevoir ou évacuer du liquide ;
- une chemise de refroidissement par liquide périphérique du carter (110) reliée au premier canal de refroidissement par liquide (ENTREE Refroidissement) et au deuxième canal de refroidissement par liquide (SORTIE Refroidissement), la chemise de refroidissement par liquide du carter périphérique (110) étant configurée pour être en contact avec les lamelles du stator (1030a) afin d'extraire les pertes dans le fer des lamelles du stator, et avec une surface supérieure des enroulements de tête (1040) afin d'extraire les pertes dans les enroulements,
- des chemises de refroidissement par liquide des carters CE et NCE (120, 130) configurées pour être disposées à l'intérieur des carters CE et NCE (1010, 1020), respectivement, et reliées au premier canal de refroidissement par liquide (ENTREE Refroidissement) et au deuxième canal de refroidissement par liquide (SORTIE Refroidissement), respectivement,
- dans lequel les chemises de refroidissement par liquide des carters CE et NCE (120, 130) sont configurées pour être en contact avec les surfaces latérales des enroulements de tête (1040) afin d'extraire les pertes dans les enroulements ; et
- une chemise de refroidissement par liquide traversant les encoches (140) reliée aux chemises de refroidissement par liquide des carters CE et NCE (120, 130) et configurée pour être en contact avec les enroulements de tête (1040) et les spires d'enroulement des encoches du stator (1050) afin d'évacuer les pertes dans les enroulements, et
- dans lequel le système de refroidissement interne (100) est configuré pour :
∘ recevoir le liquide via le premier canal de refroidissement par liquide (ENTREE Refroidissement) et l'évacuer via le deuxième canal de refroidissement par liquide (SORTIE Refroidissement) ; ou
∘ recevoir le liquide via le deuxième canal de refroidissement par liquide (SORTIE Refroidissement) et l'évacuer via le premier canal de refroidissement par liquide (ENTREE Refroidissement), et
∘ distribuer le liquide à travers la chemise de refroidissement liquide du carter périphérique (110), la chemise de refroidissement liquide du carter CE (120), la chemise de refroidissement liquide du carter NCE (130) et la chemise de refroidissement liquide traversant les encoches (140),
- dans lequel le premier canal de refroidissement par liquide (ENTREE Refroidissement), le deuxième canal de refroidissement par liquide (SORTIE Refroidissement), la chemise de refroidissement par liquide du carter périphérique (110), la chemise de refroidissement par liquide du carter CE (120), la chemise de refroidissement par liquide du carter NCE (130) et la chemise de refroidissement par liquide traversant les encoches (140) sont constitués d'un matériau métallique tel que l'aluminium, l'alumine Al₂O₃, le nitrure d'aluminium, l'acier inoxydable ou le titane, isolés par un revêtement d'émail polymère, des films ou revêtements polyimide ou papier aramide ; et
- une barrière non métallique (150) mise en place dans la chemise de refroidissement par liquide traversant les encoches (140), telle que de la polyétheréthercétone, de la polyéthercétonecétone ou de la fibre de carbone, afin de couper le chemin électrique et/ou magnétique.

2. Système de refroidissement interne (100) selon la revendication 1, dans lequel le premier canal de refroidissement par liquide (ENTREE Refroidissement) et/ou le deuxième canal de refroidissement par liquide (SORTIE Refroidissement) ont une forme circulaire.

3. Système de refroidissement interne (100) selon l'une des revendications 1 ou 2, dans lequel la chemise de refroidissement par liquide du carter périphérique (110) a une forme en spirale.

4. Système de refroidissement interne (100) selon l'une quelconque des revendications précédentes, dans lequel les chemises de refroidissement par liquide des carters CE et NCE (120, 130) ont une forme en spirale et sont configurées pour être encapsulées axialement ou radialement à l'intérieur des carters CE et NCE (1010, 1020), respectivement.

5. Système de refroidissement interne (100) selon l'une quelconque des revendications précédentes, dans lequel la chemise de refroidissement par liquide traversant les encoches (140) est configurée :
- pour s'étendre à travers les spires de l'enroulement des fentes du stator (1050) lorsque le moteur électrique (1000) comprend une configuration d'enroulement concentré ; ou
- pour s'étendre sur un côté des spires de l'enroulement des fentes du stator (1050) lorsque le moteur électrique (1000) comprend une configuration d'enroulement distribué.

6. Système de refroidissement interne (100) selon l'une quelconque des revendications précédentes, comprenant en outre une matrice à haute conductivité thermique (160) configurée pour être en contact avec les chemises de refroidissement par liquide des carters NCE et CE (120, 130) et les enroulements de tête (1040) du moteur électrique (1000), la matrice à haute conductivité thermique (160) étant configurée pour évacuer les pertes des enroulements de tête.

7. Système de refroidissement interne (100) selon la revendication précédente, dans lequel la matrice à haute conductivité thermique (160) comprend de la résine, un produit d'imprégnation ou de l'époxy.

8. Système de refroidissement interne (100) selon l'une quelconque des revendications 6 ou 7, dans lequel la chemise de refroidissement par liquide du carter périphérique (110), les chemises de refroidissement par liquide des carters NCE et CE (120, 130) et la chemise de refroidissement par liquide traversant les encoches (140) comportent une configuration de petites fentes carrées entre les dents, en combinaison avec la matrice à haute conductivité thermique (160), afin d'augmenter la surface d'échange thermique.

9. Moteur électrique (1000) comprenant le système de refroidissement interne (100) selon l'une quelconque des revendications précédentes, le système de refroidissement interne (100) comprenant un liquide, le moteur comprenant un arbre (1060) et un rotor (1090), et dans lequel l'arbre (1060) comporte des ailettes (1070) destinées à refroidir le rotor (1090) par convection et par échange thermique avec le système de refroidissement interne (100).

10. Moteur électrique (1000) selon la revendication, comprenant en outre des enroulements de tête imprégnés (1040) présentant une imprégnation de résines époxy de polyester ou de silicone.

11. Moteur électrique (1000) selon les revendications 9 ou 10, dans lequel le système de refroidissement interne (100) comprend un fluide diélectrique tel que de l'huile minérale comme liquide de refroidissement, le premier canal de refroidissement par liquide (ENTREE Refroidissement), le deuxième canal de refroidissement par liquide (SORTIE Refroidissement), la chemise de refroidissement par liquide du carter périphérique (110), la chemise de refroidissement par liquide du carter CE (120), la chemise de refroidissement par liquide du carter NCE (130) et la chemise de refroidissement par liquide traversant les encoches (140) sont constitués d'un matériau métallique.

12. Moteur électrique (1000) selon les revendications 9 à 11, qui est une machine synchrone à aimants permanents.
